(19) Europäisches Patentamt
European Patent Office
Office européen des brevets

(11) **EP 3 415 329 B1**

(12) **EUROPEAN PATENT SPECIFICATION**

(45) Date of publication and mention
of the grant of the patent:
**28.04.2021 Bulletin 2021/17**

(51) Int Cl.:
*B41J 3/407* (2006.01)　　　*B44C 5/04* (2006.01)
*E04F 15/00* (2006.01)　　　*B41M 5/00* (2006.01)
*E04F 15/02* (2006.01)　　　*H04N 1/10* (2006.01)
*B05C 5/02* (2006.01)　　　*B27N 7/00* (2006.01)
*B29C 63/00* (2006.01)　　　*B29L 31/44* (2006.01)

(21) Application number: **16712941.0**

(22) Date of filing: **12.02.2016**

(86) International application number:
**PCT/ES2016/070082**

(87) International publication number:
**WO 2017/137638 (17.08.2017 Gazette 2017/33)**

(54) **SYSTEM, METHOD AND PROGRAM FOR THE EDGING OF PARTS BY MEANS OF PRINTING**

SYSTEM, VERFAHREN UND PROGRAMM FÜR DAS KANTEN VON TEILEN MITTELS DRUCK

SYSTÈME, PROCÉDÉ ET PROGRAMME DE DÉLIGNAGE DE PIÈCES AU MOYEN DE L'IMPRESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.12.2018 Bulletin 2018/51**

(73) Proprietor: **JITBOARDS, S.L.**
**31191 Esquíroz de Galar (Navarra) (ES)**

(72) Inventors:
• **MARTÍNEZ OSÉS, Jose María**
**31191 Esquíroz de Galar (Navarra) (ES)**

• **URRUTIA BAZÁN, Arnaldo**
**26006 Logroño (La Rioja) (ES)**

(74) Representative: **Cueto, Sénida**
**C/ Los Madroños 23**
**Velilla de San Antonio**
**28891 Madrid (ES)**

(56) References cited:
**EP-A1- 1 479 524**　　　**WO-A2-2007/054812**
**CH-A2- 704 542**　　　**DE-A1-102006 057 961**
**DE-U1-202004 000 662**　　　**JP-A- 2006 009 287**
**JP-A- 2017 177 473**　　　**US-A1- 2003 020 767**
**US-A1- 2007 283 648**

## Description

### Field of the Invention

The invention relates to an industrial printing method and system applicable, for example, to edging processes of wooden parts for use in the manufacture of furniture. The invention also relates to a printing computer program that can be used in this system.

### Prior Art

In today's furniture industry, the use of chipboard parts for the manufacture of furniture is common, as a more economic and/or ecological alternative to the use of solid natural wood. These chipboards are usually made out of small particles of wood of a variable size (shavings, fibres or others) joined together by pressure gluing. The texture of the chipboard is irregular and porous so the boards normally need to be veneered, which consists in placing or applying a thin layer or sheet on both surfaces of the board to provide an appropriate finish. Veneering may be carried out using natural wood veneers or plastic laminates. In particular, chipboards with melamine resin veneers are often used for the manufacture of all types of furniture for domestic, industrial or commercial use. These veneered boards can later be cut to the desired measurements.

Furthermore, to improve the finish and the stability of melamine boards, it is also advisable to cover the edges or lateral sides between the two surface faces of the board. To do so, edge covers are used, consisting in strips with a similar finish to the veneer of the surface faces of the boards. This operation, consisting in placing or gluing a strip in order to cover the chipboard that is revealed when cutting the board, is commonly known in the art as edging. Board edging may be carried out by hand for domestic use; however, previously-edged boards are also available for purchase. At an industrial level, edging machines are known which allow edging boards, the machines having variable configurations and complexities.

As for the materials used to cover the edges of melamine boards, a common solution is to edge the boards by placing an extruded plastic strip that imitates the pattern of the melamine veneer. Normally, this imitation mainly includes the colour and the texture of the veneer. Another solution known in the art is described in Patent no. EP2688722, which discloses a method and a device for the edging of wood-based boards using rollable strips. The rollable strip is incorporated in an edging machine fitted with a transportation belt for the transfer of the board to be processed. The patent describes rollable strips that are manufactured with wooden particles with a binder, as an alternative to the use of plastic strips. The procedure described includes a special treatment of the strip, by heating and humidification processes, in order to soften the binder and increase the elasticity of the strip, facilitating its rolling. Later, the board edging unrolls the strip and glues it to the edge of the board as it is pulled by the edging machine's transporter belt. The main advantage of this solution lies in the fact that the strip used is cheaper than plastic or wooden veneer strips.

Either of the two solutions described above for the edging of wooden boards implies that the manufacturers of these products must have and stock many different strips, corresponding to all of the different possible patterns of the boards to be manufactured, with the subsequent increase in production costs.

Another limitation of these types of solutions is that they imply the need to manufacture in batches, according to the different types of strips, or the need to have different edging machines to simultaneously manufacture boards with different patterns without stoppages in the production process to change the strips. Some edging machines solve this problem by incorporating systems that enable the automatic changeover or replacement of the different types of strips, or systems that incorporate multiple edge loaders, eliminating the need to have a second machine or to make undesired stoppages. Even so, it is still necessary to have many strips in stock to match the different patterns to be imitated.

A further disadvantage derived from these conventional systems for the edging of boards is that the quality of the edging finish is often insufficient. This problem occurs, for example, when melamine veneers that imitate the grain of natural wood are used, whereby this grain is present in one or various areas in a predominant direction which is not parallel to the longitudinal direction of the board. In these cases, the grain of the surface sheet will contrast visually with the grain of the edging strip, due to the fact that the grain of the strips usually coincides with the longitudinal direction of the board.

The patent application US2007283648A1 discloses a solution for decorationg a bevel surface, applicable for laminated floorings. The invention relates to a method and system using a non-transfer or noncontact printing technique as an alternative to the conventional method based on thermo-foils transfer printing on the bevel surfaces, which is complex and requires to keep an large inventory of the thermo-foils used. The invention is based on choosing a previously scanned pattern that is subsequently printed on the bevel, thus providing versatility in color and pattern of the decorated bevel surface. Different technologies of digital printing are considered compatible with the invention.

The patent application WO2007054812A2 discloses another flooring application to decorate chamfers by means of inkjet printing. A pattern matching a flooring surface can be printed on the chamfer surface according to stored data.

An objective of this invention is to provide a system that overcomes at least one of the limitations described heretofore for conventional systems that use multiple strips for the edging of boards.

## Brief Description of the Invention

The object of the invention is a method and a system for the printing of images on at least one part according to the independent claims. The system particularly comprises: at least one scanner explorer of an initial surface of the part and generator of an initial set of data that defines a captured image; a control unit comprising a processor, whereby this processor is in communication with the scanner and receives the data of the captured image transmitted by the scanner, and a memory unit in communication with the processor, whereby this memory unit stores instructions that are carried out by the processor to generate a second set of data defining a processed image, based on the captured image; at least one printing unit, in communication with the processor, whereby this printing unit is adapted to receive the processed image and print this processed image on a second surface of the part, whereby this second surface forms an angle $\alpha$ with the first surface. Therefore, the invention proposes a system that enables the image of the first surface of the part to be captured and printed on a second surface or different plane, for example on a second surface that is substantially perpendicular to the first surface. In this way, the invention enables an industrial printing system to be applied to edging processes, such as, for example, melamine boards, as an alternative to traditional edging using extruded plastic strips or other materials.

In a preferred embodiment, the processed image is generated via an algorithm that comprises the generation of a mirror image based on at least one part of the captured image. This characteristic provides a feeling of visual continuity between both surfaces thanks to the generation of the mirror image. The correspondence between the images of both surfaces improves the quality of the edging, particularly in cases in which the boards have grains that are not parallel to the longitudinal direction of the edged part.

In the present document, edging will be interpreted in a broad sense, without necessarily requiring the positioning of a strip. Instead, edging is defined as the part of the processing of parts that provides a finish to the edge or lateral side.

An important advantage of the proposed system is the reduction of board manufacturing costs, as edging by printing eliminates the need to have multiple strips to imitate the different surface patterns that a board may have, with the subsequent savings in raw materials. The manufacturing process also becomes more flexible as the need to manufacture in batches according to the different types of strips is eliminated. Another advantage of eliminating the need to have strips in stock is that the response times to new melamine patterns of parts to be edged can be improved, which is extremely interesting from a commercial point of view.

Furthermore, the system in accordance with the invention avoids undesired stoppages, required in conventional edging machines to change the different types of strips, whereby the system enables the simultaneous edging of boards with different patterns, hence optimizing production. The need for multi-edge loaders is also eliminated. Therefore, the system proposed by the invention helps to reduce costs related to the purchase of machinery, maintenance and depreciation in relation to conventional edging machines.

In a particularly advantageous embodiment of the invention, which will be described in greater detail hereinafter, the system is integrated in an edging machine. The processed image is generated in a critical time as the processed part is moved between the scanner and the printing unit, guided by a transport element, such as a transporter belt of the edging machine. These characteristics facilitate the integration of the system proposed by the invention in existing edging processes or facilities.

Another object of the invention is a computer program that enables the printing of the processed image to be optimized using an algorithm which will be explained hereinafter.

## Brief Description of the Figures

The details of the invention can be seen in the accompanying figures, which do not intend to limit the scope of the invention:

- Figure 1 shows a perspective view of the components of a first embodiment of the system in accordance with the invention.
- Figure 2 shows a schematic representation of a first board edged by the system of Figure 1.
- Figure 3 shows a schematic representation of a second board edged by the system of Figure 1.
- Figure 4 shows a block diagram of the system of Figure 1 when this system is integrated in an edging machine.
- Figure 5 shows a sequence of the processing of the captured image for the generation of the processed image using the algorithm implemented by the computer program.

**Detailed Description of the invention**

The invention relates to an image printing system that enables parts to be edged by industrial printing techniques. The system can be used, for example, in wooden part edging processes utilized in the manufacture of furniture. In accordance with a non-limiting embodiment of the invention, the proposed system may be integrated in edging machines fitted with some kind of transport element to provoke the displacement of the part to be processed. The part may be, for example, a wood imitation melamine board. The invention also relates to a method of board edging carried out by this system, to a computer program that can be executed in the system and to a board edged by printing.

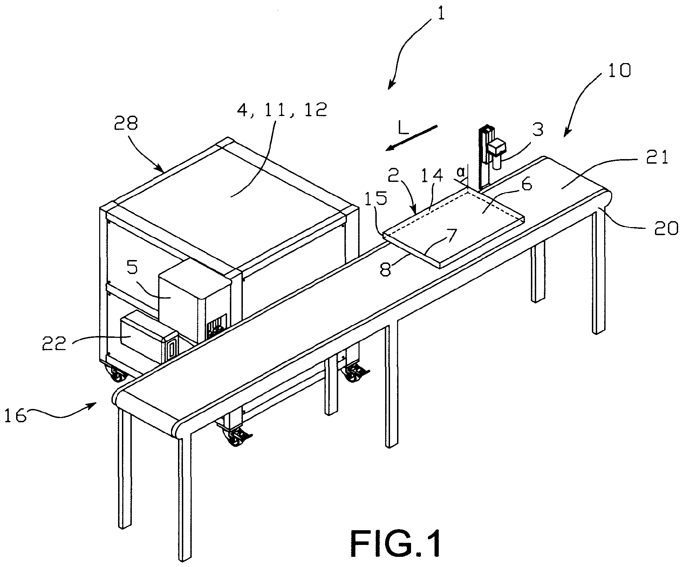

Figure 1 shows a perspective view of the components of a first embodiment of the system in accordance with the invention. As can be seen in Figure 1, the system (1) for the printing of images on parts (2) comprises an image capture device or scanner (3), a control unit (4) and a printing unit (5) connected to each other. The scanner (3) explores a first surface (6) of the part (2). This first surface (6) is arranged on the upper external face (7) of the part (2) and extends along the whole length of the part (2). In this way, the scanner (3) generates an initial set of data consisting of a series of lines that define a captured image (9) (not shown in Figure 1). In the specific embodiment of Figure 1, the scanner (3) is a linear vision camera fitted with an appropriate illumination system. The camera is placed in an input area (10) of the system (1) in order to obtain the captured image (9) based on scanning the whole of the first longitudinal first surface (6) of the processed part (2).

The data from the captured image (9) is sent to the control unit (4) for its subsequent processing. The control unit (4) comprises a processor (11) in communication with the scanner (3) and a memory unit (12) in communication with the processor (11). The memory unit (12) stores codes or instructions which are executed by the processor (11) to generate, based on the captured image (9), a second set of data that defines a processed image (13) (not shown in Figure 1). The processed image (13) is sent to the printing unit (5) to be printed on a second surface (14) of the part (2). This second surface (14) is arranged on an edge (15) of the part (2) and extends along the whole length of the part (2). The system (1) in accordance with the enables images contained on different planes or surfaces (6, 14) to be captured and printed, whereby the capture plane and the printing plane form an angle $\alpha$.

The printing unit (5) in the embodiment of Figure 1 is specifically an industrial, ink injection printing device or, more specifically, a four-colour ultraviolet inkjet printer (CMYK) which comprises four printheads corresponding to the cyan (C), magenta (M), yellow (Y) and black (K) chromatic components. This printing unit (5) is positioned in an output area (16) of the system (1). The processed image (13) is printed on a plane that is substantially perpendicular to the plane of the captured image (9). Therefore, in the embodiment of Figure 1, the processed part (2) is moved in a direction L, from the input area (10) towards the output area (16) of the system (1), passing through various positions under the scanner (3) and in front of the printing unit (5). The scanner (3) is adapted to capture the captured image (9) as the part (2) moves under the scanner (3) and the printheads of the printing unit (5) are adapted to print the processed image (13) on the edge (15) as the part (2) moves in front of the printing unit (5).

The angle $\alpha$ preferably has an approximate value of 90° so that the surfaces (6, 14), corresponding to the captured image (9) and the processed image (13), are substantially perpendicular as in the specific embodiment of Figure 1. Other embodiments of the invention are contemplated in which the capture and printing planes have a different relative spatial layout than the embodiment shown in the figure; i.e., angle $\alpha$ can have values other than 90°.

In the embodiment of Figure 1, the printheads of the printing unit (5) use a contact-free injection technology, by drip injection upon demand. In accordance with this technology, for the creation of the desired image, each injection printhead ejects or projects ink drops upon demand onto the substrate to be printed, so that ink drops are only produced when required by the system (1). Each printhead has a 70 mm-wide printing band and has two rows with 500 injectors on each row. The diameter of each injector is smaller than the thickness of a human hair and each injector is capable of releasing thousands of ink drops per second at an approximate speed of six metres per second. Furthermore, this type of printhead enables the user of the system (1) to choose the size or sizes of the drops to be used. The size of the drop determines the resolution of the printed image, or in other words, the real dots-per-inch (dpi), whereby a limited number of colour levels or levels of grey (more specifically, a maximum of 8 chromatic levels) is possible for each printhead. The choice of this printing technology for the system (1) of the invention is due to its flexibility, versatility and features, as it enables images to be obtained with a high degree of precision and printing quality; in addition, printing can be carried out using a wide range of fluids (oil-based ink solvents, UV-curables, pigmented inks, highly viscous inks, varnishes, ceramic inks, etc.) and on a wide variety of different substrates.

Preferably, the processor (11) generates the processed image (13) through the execution of an algorithm that comprises a processing of the lines captured by the scanner (3), to form the whole of the captured image (9) of the first surface (6), a subsequent processing of the captured image (9) to calculate a mirror image based on at least part of this captured image (9), and the adaptation of the mirror image to the specific characteristics of the printing unit (5). In the embodiment of Figure 1, the mirror image is broken down into four colours (CMYK) to form the processed image (13) to be printed on the edge (15) of the part (2) with the format required by the printing unit (5). Thanks to the generation of the mirror image, the edging of the part (2) is carried out by printing an image that gives a feeling of continuity between the surface pattern of the part (2) and its edge (15) or lateral side.

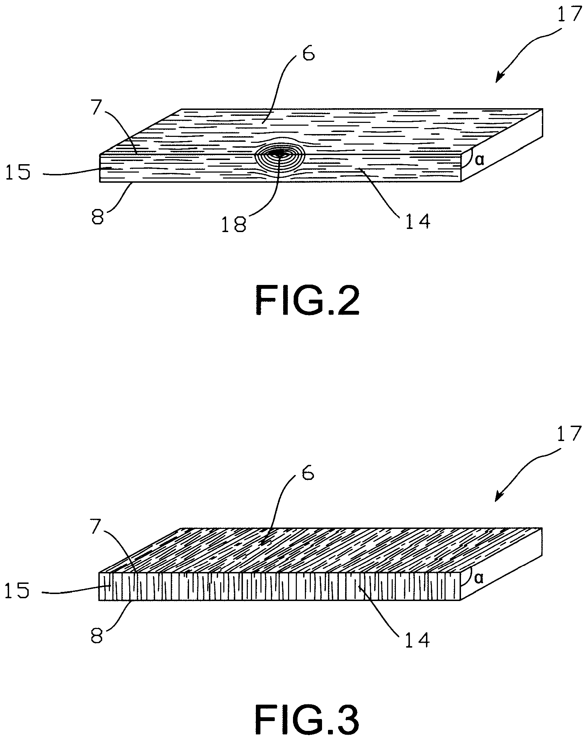

Figure 2 shows a schematic representation of a part (2), specifically a melamine board (17), edged using a system (1) in accordance with the invention. As can be seen in the figure, the continuity of the grain is achieved thanks to the printing of the mirror image on the edge (15). Continuity can be achieved even if the board (17) has knots (18), for example in an area of the first surface (6) close to the edge (15), obtaining a visual print similar to that of a cut natural wood board.

Figure 3 shows another example of the use of the system (1) proposed by the invention. As can be seen in the figure, in this case a continuity effect is achieved despite having a grain in a non-parallel direction to the longitudinal direction of the board (17). This application is particularly advantageous because, in traditional edging applications, it is not common to have strips with multiple grain directions for a same type of pattern. As shown in the examples in Figures 2 and 3, thanks to the special features of the system (1) of the invention, the processed image (13) is automatically adjusted to the grain direction in all cases and at no extra cost.

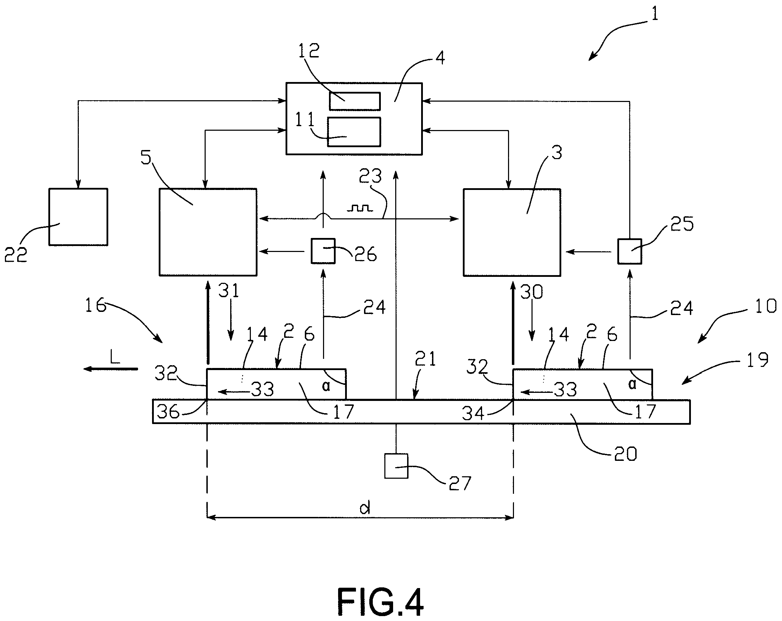

Figure 4 shows a schematic block diagram of the system (1) of Figure 1 when this system (1) is integrated in an edging machine (19). This edging machine (19) allows for the conventional edging of a part (2), for example a melamine board (17) with two upper and lower external faces (7, 8) and an edge (15) between both external faces (7, 8) such as the board (17) in Figures 2 and 3. The edging machine (19) comprises a fixed element (20) and a transport element (21), for example a transporter belt. The transport element (21) moves with respect to the fixed element (20) in a direction L coinciding with the longitudinal direction of the part (2) causing the part (2) to move in this direction L. As already mentioned in the brief description of the invention, edging by printing as per the invention eliminates the need for a conventional strip to match the pattern of each board to be edged, with the subsequent economic savings. Optionally, prior to printing the processed image (13), a white plastic strip may be placed on the edge (15) to provide increased protection of the board (17) and a better finish of the printing. In the embodiment of the figures, the printing of the processed image (13) takes place on this white strip (not shown in the figures). Even so, an economic advantage is obtained over edging by wood imitation strips, as the cost of the printing of the processed image (13) on a white strip is far less than the cost difference between a wood imitation strip and a plastic white strip. In the embodiment described, the system (1) is also fitted with a curing lamp (22), more specifically, a UV LED lamp, for the curing of the printing on the plastic strip. Other embodiments of the invention are contemplated in which printing is carried out on any other auxiliary element, alternative to the plastic white strip laid out on the edge (15) of the board (17) to carry out an equivalent function.

The diagram of Figure 4 also shows diverse control signals and orders that are exchanged by the components of the system (1). These signals and orders may also be transmitted to and from the control unit (4) by means, for example, of input and output cards in communication with the processor (11) and connected to instrumentation external to the control unit (4). This enables the process to be monitored on a user interface in communication with the control unit (4). The control unit (4) of the system (1) in the figures is run on a computer installed for example on an auxiliary piece of furniture (28) as shown in Figure 1. Other embodiments are also contemplated in which the control unit (4) is comprised in a different type of control system, such as a control system based on programmable logic controllers.

Optionally, the system (1) incorporates devices or elements for capturing movement and generating at least one displacement detection signal (23) of the transport element (21) and at least one presence signal (24) of the part (2) on the transport element (21). These movement capturing elements can comprise diverse position detectors (25, 26) for detecting the position of the product or part (2), as shown schematically in Figure 4. The position detectors (25, 26) inform the diverse components of the system (1) exactly when the part (2) starts and finishes passing by the scanner (3) and when the part (2) starts and finishes passing by the printing unit (5). These position detectors (25, 26) may be implemented using position switches, limit switches or other means having an equivalent functionality. The system (1) may optionally and complementarily be fitted with an additional position detector to detect exactly when the part (2) finishes passing through the curing lamp (22), this additional detector allowing to disconnect the lamp when no part (2) is detected, thereby leading to corresponding energy savings. The movement capturing elements may optionally comprise a rotary encoder (27) which generates the displacement detection signal (23) of the transport element (21) by sending a signal or series of pulses to both the scanner (3) and the printing unit (5). This allows to automatically control the moments in time in which images are to be captured by the scanner (3) and in which images are to be printed by the printing unit (5).

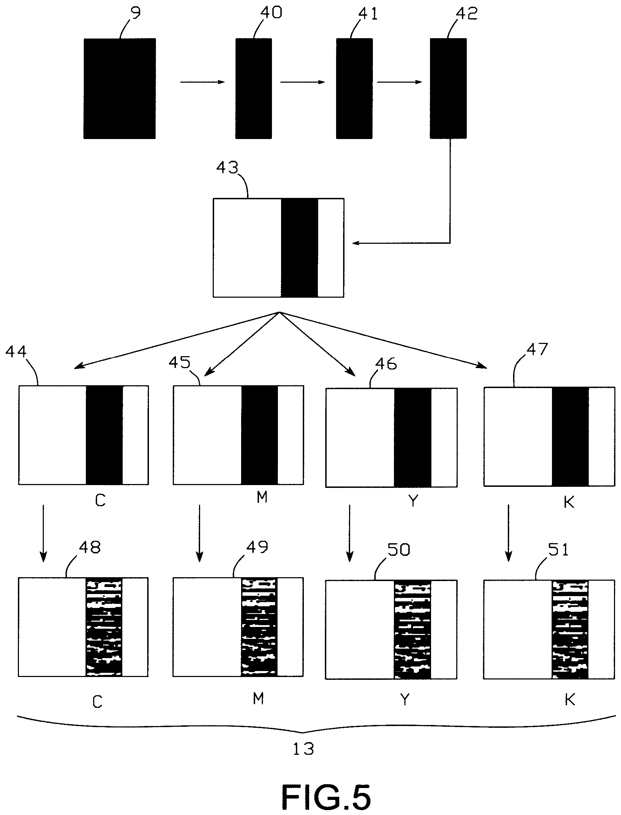

The invention also relates to a computer program for generating the processed image (13) based on the captured image (9) taken by the scanner (3), whereby this program resides in the control unit (4). The program includes a set of codes or instructions, stored in the memory unit (12) and executed by the processor (11). The codes or instructions define an algorithm, the algorithm providing for the generation of the processed image (13) based on the captured image (9). Figure 5 shows a sequence of an embodiment of the algorithm executed by the processor (11). This algorithm comprises an initial generation phase, in which the whole captured image (9) is generated based on the lines captured by the scanner (3). In the embodiment in of Figure 4, the scanner (3) begins exploring the first surface (6) of the part (2) and generating a set of data or lines on receiving the pulse signal (23) from the encoder (27), regardless of whether the part (2) is passing under the scanner (3) or not. The position detector (25) activates a control signal, digital input or control bit of the scanner (3) to indicate the presence of the part (2), so that the scanner (3) identifies the lines of the captured image (9) whilst this control bit is activated. The scanner (3) has a buffer for temporarily storing the lines of the captured image (9) prior sending them to the control unit (4). The lines captured by the scanner (3) may be sent individually or in batches to the control unit (4). The captured image (9) is formed in the control unit (4) by discriminating the lines captured by the scanner (3) having an activated control bit indicating that the line is a scanned line of the part (2). This phase of generating the captured image (9) may also include detecting and offsetting any black or false lines generated by the scanner (3), corresponding to potential distortions in the pulse signal (23) of the encoder (27). Once the complete captured image (9) of the first surface (6) of the part (2) is generated, the algorithm carries out a phase of adapting the width of the captured image (9), the phase comprising generating a cropped image (40) whose width coincides with the width of the edge (15) of the processed part (2). The cropped image (40) has a format of 24 bits, or in other words, a resolution of 24 bits per pixel (bpp). Using this cropped image (40), a processed cropped image (41) having an 8-bit format is calculated; i.e., the amount of colours is reduced to a maximum of 256 colours per pixel. The processing of the cropped image (40) to obtain the processed cropped image (41) may be carried out using different techniques known in digital image processing, such as Floyd Steinberg algorithms, ordered dithering algorithms or non-dithering algorithms based on threshold methods. Based on the processed cropped image (41) the algorithm calculates the corresponding mirror image (42) by generating a symmetry with respect to the pixels of the processed cropped image (41). Next, the algorithm comprises an adapting phase in which the mirror image (42) is adapted to the physical characteristics of the printing unit (5). This adaptation comprises generating an adapted image (43) which is adapted to the specific size of the printheads and the injectors of the printing unit (5), embedding the mirror image (42) within this adapted image (43), defining a series of pixels of the adapted image (43) that do not correspond to the edge (15) to be printed, and defining an offset or waiting time for printing the embedded mirror image (42). This adapted image (43) allows only for the injectors of the printheads that are facing the edge (15) of the part (2) to print. Further, the algorithm breaks the adapted image (43) down into four monochrome images (44, 45 46, 47) corresponding to the yellow (Y), magenta (M), cyan (C) and black (K) chromatic components. Before sending these CMYK monochrome images (44, 45 46, 47) to the printheads of the printing unit (5), a final phase of the algorithm is carried out, the final phase consisting in generating four CMYK processed monochrome images (48, 49, 50, 51). These four CMYK processed monochrome images (48, 49, 50, 51) form the processed image (13) which is sent to the printing unit (5) to be printed on the edge (15) of the part (2).

In the embodiment of the figures, the generation of the four CMYK processed monochrome images (48, 49, 50, 51) comprises a series of steps that are described in more detail hereinafter. First of all, a brightness and contrast correction is performed on each of the CMYK monochrome images (44, 45 46, 47) using the following formula:

$$P[x] = k * Q[x] + i$$

whereby:

- $Q[x]$ is the numeric value between 0-255 of each pixel of the monochrome image,
- $k$ is a brightness correction factor,
- $i$ is a contrast correction factor and
- $P[x]$ is the new corrected numeric value for each pixel, limited to values between 0-255.

Following the brightness and contrast correction, an error diffusion algorithm (e.g., a Floyd Steinberg algorithm) is applied to each of the CMYK monochrome images (44, 45 46, 47) to reduce the number of colours of each pixel to a maximum of eight colours or tones coinciding with the eight permitted chromatic levels for each printhead of the printing unit (5), as shown in the following table:

Table 1: Reduction from 256 to 8 colours (processing CMYK monochrome images)

| Printhead printing level | Monochrome image pixel in 8-bit format | Value chosen for applying the diffusion algorithm |
|---|---|---|
| 7 | 0-7 | 0 |
| 6 | 8-54 | 30 |
| 5 | 55-89 | 72 |
| 4 | 90-125 | 107 |
| 3 | 126-161 | 144 |

(continued)

| Printhead printing level | Monochrome image pixel in 8-bit format | Value chosen for applying the diffusion algorithm |
|---|---|---|
| 2 | 162-197 | 179 |
| 1 | 198-233 | 215 |
| 0 | 234-255 | 255 |

The described algorithm also enables the definition of a second colour table adapted to the characteristics of the type of wood or pattern presented by the board (17) to be processed. Continuing with the example in Table 1:

Table 2: Fine assignment of colour (CMYK processing monochrome images)

| Printhead printing level | Monochrome image pixel in 8-bit format | Value chosen for applying the diffusion algorithm |
|---|---|---|
| 3 | 0-7 | 0 |
| 3 | 8-54 | 0 |
| 2 | 55-89 | 125 |
| 2 | 90-125 | 125 |
| 2 | 126-161 | 125 |
| 1 | 162-197 | 198 |
| 1 | 198-233 | 198 |
| 0 | 234-255 | 255 |

This second table, which is defined for each of the CMYK monochrome components (44, 45 46, 47), aims to improve the adaptation of the tone of the final image to be printed with respect to the tone of the wood or scanned surface to be imitated. For example, the predominance of a specific lighter or darker tone on the scanned surface may be taken into account. The values chosen for applying the diffusion algorithm are the average values for each range (for the intermediate levels of the printhead) or the end values of each range (for the extreme levels of the printhead). The level finally chosen for each pixel, as per the first column of Table 2, defines the size of the drops to be printed by the printheads.

The aforementioned algorithm allows the printheads of the printing unit (5) to dynamically adapt the printing to the specific tone of the board (17) and to offset any capture defects by the scanner (3). The algorithm also enables offsetting the exposure time or the shutter opening of the scanner (3). Any capture defects of the scanner (3) are minimised by applying the diffusion techniques, eliminating errors that can be seen by the human eye and maintaining the general structure of the colour and composition of the imitated image. In summary, a high quality processed image (13) printed on the edge (15) of the part (2) is obtained, enabling a greater adaptation to the surface finish of the part (2), as well as quality imitations in natural solid wood finishes and others.

Other embodiments of the invention are contemplated, in which the algorithm for generating the processed image (13) comprises, in addition to generating the mirror image (42), carrying out other types of transformations, such as: tone variations, colour mixes, combinations of the captured image (9) with other images stored in the memory unit (12), etc. In this way, the system (1) enables the printing of processed images (13) combining the mirror effect with other possible additional effects.

As further shown schematically in Figure 4, the part (2) is displaced, guided by the transport element (21), from the input area (10) of the system (1) where the scanner (3) is located, towards the output area (16) of the system (1) where the printing unit (5) is located. Throughout this displacement, the part (2) crosses two positions (30, 31) in particular. When the part (2) is in an initial position (30), an end (32) of the left side (33) of the part (2) crosses a first plane. This first plane is perpendicular to the direction L at a first intermediate point (34) and is aligned with the scanner (3). At this time, the scanner (3) begins exploring the first surface (6). When the part (2) is in a second position (31), the end (32) crosses a second plane. This second plane is perpendicular to the direction L at a second intermediate point (36) and is aligned with the printing unit (5) at a distance d from the first plane. At this time, the printing unit (5) begins printing the processed image (13) on the second surface (14). The intermediate points (34, 36) are shown on the transport element (21) in Figure 4. The optional choice of an appropriate value of distance d allows implementing particularly advantageous embodiments of the system (1). These embodiments enable generating and processing the captured image (9) and generating and transmitting the processed image (13) to the printing unit (5) in time to print it on the edge (15) of the part (2) without the need for production stoppages.

Optionally, the movement of the part (2) between the intermediate points (34, 36) takes place in a time t of less than 5 seconds. In other words, the time elapsed from the start of the scanning of the first longitudinal surface (6) of the part (2) until the processed image (13) is ready to be printed by the printheads of the printing unit (5) on the edge (15) of the part (2) is less than 5 seconds, and the system (1) generates the processed image (13) within this interval. Selecting these parameters enables the system (1) to be incorporated in existing conventional edging machines, having a fixed element of around 10 metres and with typical movement speeds of the transport element of up to 30 metres per minute, enabling parts with maximum conventional lengths of up to 2400 millimetres to be edged by printing. Likewise, the embodiment described heretofore allows for the edging of parts of a greater length if the edging machine (19) into which the system (1) is incorporated enables the scanner (3) and the printing unit (5) to be positioned at a greater distance. In Figure 4, the system (1) is integrated in a part edging machine (19). Embodiments of the invention in which the system (1) has a transport element (21) for the movement of the part (2) to be processed are equally valid.

Optionally, the sending of the lines of the captured image (9) from the scanner (3) to the control unit (4), the processing of the captured image (9) and the generation and sending of the processed image (13) to the printing unit (5) can be overlapped or carried out in streaming. Streaming is a communications concept or technology referring to a continuous flow of data, whereby the data which is transferred between a transmitter and a receiver is used or consumed by the receiver whilst the data is being transferred and without waiting for this data transfer to be completed. The term streaming is often used to refer to the transfer of video and/or audio data. Thanks to the use of this technology, embodiments of the invention are contemplated in which the scanner (3) and the printing unit (5) are placed close or adjacent to each other so that the printing of the processed image (13) can be started whilst the first surface (6) of the part (2) is being explored, so that the scanning and edging of the processed part (2) are carried out simultaneously or overlapped.

The invention also relates to a method for edging parts by industrial printing. This method consists in: obtaining a scanner (3) for exploring a first surface (6) of a part (2) and for generating an initial set of data defining a captured image (9); sending the captured image (9) to a control unit (4) which is in communication with the scanner (3); generating, based on the captured image (9), a second set of data defining a processed image (13); sending the processed image (13) to a printing unit (5) which is in communication with the control unit (4); and printing the processed image (13) on a second surface (14) of the part (2), whereby this second surface (14) forms an angle $\alpha$ with the first surface (6).

Preferably, the processed image (13) in accordance with the method of the invention is generated by executing an algorithm which includes calculating a mirror image (42) based on at least part of the captured image (9).

Optionally, the method as per the invention comprises the additional steps of: generating, based on the captured image (9), a cropped image (40) adapted to the width of the second surface (14); generating a processed cropped image (41) having a format of 8 bits per pixel, based on the cropped image (40); generating a mirror image (42) of the processed cropped image (41); generating an image (43) adapted to the size of the printheads of the printing unit (5) and embedding the mirror image (42) into this adapted image (43); breaking down the adapted image (43) into four monochrome images (44, 45, 46, 47) and generating, based on these four monochrome images (44, 45, 46, 47), four processed monochrome images (48, 49, 50, 51) via a diffusion algorithm adapted to a limited number of chromatic levels admitted by the printheads of the printing unit (5).

Other embodiments are contemplated in which the printing unit (5) presents other characteristics: other printing systems, different types of inks, etc.

The type of board (17) shown in the figures is a non-limiting example of an application of the invention. The system (1) and method in accordance with the invention are applicable to any other type of board; the type of chipboard, surface finish or materials that can be used in the manufacture of the board are non-limiting. For instance, the invention is applicable to the edging of fibre chipboards, medium density fibres (commonly known as MD or MDF), acrylics, latex, foam, metal, etc. Likewise, the finish of the board (17) may be laminated or layered, and the materials may be diverse (melamine, wood, acrylics, metal, etc.).

The system (1) may also be used in industries other than the wood sector, such as graphic arts, decorative panels or other types of industrial decoration.

**Claims**

1. Edging machine comprising an integrated system (1) for the printing of images on at least one part (2), said system (1) comprising:

   - at least one scanner (3), explorer of a first surface (6) of the part (2) and generator of an initial set of data lines defining a captured image (9);
   - a control unit (4) comprising a processor (11), wherein the processor (11) is in communication with the scanner (3) and receives the data lines of the captured image (9) transmitted by the scanner (3), and a memory unit (12) in communication with the processor (11), wherein the memory unit (12) stores instructions that are executed by the processor (11) to generate a second set of data defining a processed image (13) based on the captured image (9);

- at least one printing unit (5), in communication with the processor (11), wherein the printing unit (5) is adapted to receive the processed image (13) and to print the processed image (13) on a second surface (14) of the part (2), the second surface (14) forming an angle $\alpha$ with the first surface (6),

- a fixed element (20) and a transport element (21) to provoke the displacement of the processed part (2) with respect to the fixed element (20) in a direction L, causing the movement of the part (2) in the L direction, the direction L coinciding with the longitudinal direction of the part (2), wherein the part (2) adopts at least the following positions during movement: an initial position (30) in which an end (32) of a left side (33) of the part (2) crosses a first plane, wherein the first plane is aligned with the scanner (3) and is perpendicular to the direction L, and in which the scanner (3) begins the exploration of the first surface (6), and a second position (31) in which the end (32) crosses a second plane, wherein the second plane is aligned with the printing unit (5), is perpendicular to the direction L and is located at a distance d from the first plane, and in which the printing unit (5) begins the printing of the processed image (13) on the second surface (14), and wherein

- the processed image (13) is generated in a critical time as the processed part (2) is moved between the scanner (3) and the printing unit (5) guided by the transport element (21) .

2. System (1), according to claim 1, **characterised in that** the angle $\alpha$ is around 90° so that the surfaces (6, 14) are arranged substantially perpendicular to each other.

3. System (1), according to claim 1 or 2, **characterised in that** the processor (11) generates the processed image (13) via the execution of an algorithm that comprises the generation of a mirror image (42) based on at least part of the captured image (9).

4. System (1), according to claim 1 or 2, **characterised in that** the printing unit (5) comprises four cyan (C), magenta (M), yellow (Y) and black (K) monochrome printheads, and the processor (11) generates the processed image (13) via the execution of an algorithm that comprises: the generation of a cropped image (40) based on the captured image (9) adapted to the width of the second surface (14); the generation of a processed cropped image (41) based on the cropped image (40) with a format of 8 bits per pixel; the generation of a mirror image (42) of the processed cropped image (41); the generation of an image (43) adapted to the size of the printheads of the printing unit (5) and the embedding of the mirror image (42) into the adapted image (43); the breaking down of the adapted image (43) into four monochrome images (44, 45, 46, 47); and the generation of four processed monochrome images (48, 49, 50, 51), based on these four monochrome images (44, 45, 46, 47), via a diffusion algorithm adapted to a limited number of chromatic levels admitted by the printheads of the printing unit (5).

5. System (1), according to claim 1 or 2, **characterised in that** it comprises movement capturing elements that generate at least one displacement detection signal (23) of the transport element (21) and at least one presence signal (24) of the part (2) on the transport element (21).

6. System (1), according to claim 5, **characterised in that** the movement capture elements comprise at least two position detectors (25, 26) and at least one encoder (27) which sends a pulse signal to the scanner (3) and to the printing unit (5).

7. System (1), according to claim 1, **characterised in that** both the movement of the part (2) between the first and the second plane and the generation of the processed image (13) takes place in a time t of less than 5 seconds.

8. System (1), according to claim 1, **characterised in that** the part (2) is a chipboard (17) with melamine veneer, wherein the board (17) has two external faces (7, 8) and an edge (15) between the two external faces (7, 8), wherein the first surface (6) of the part (2) corresponds to one of the external faces (7) and the second surface (14) corresponds to the edge (15).

9. System (1), according to claim 8, **characterised in that** the processor (11) generates the processed image (13) via the execution of an algorithm comprising at least the generation of a mirror image (42) based on at least part of the captured image (9).

10. System (1), according to any one of claims 1 to 4, **characterised in that** the generation of the captured image (9) and the printing of the processed image (13) are overlapped.

**11.** Method for edging parts by printing, by means of a system (1) integrated in an edging machine according to claim 1, **characterised in that** the method comprises the steps of:

- obtaining at least one explorer scanner (3) of a first surface (6) of at least one part (2),
- generating an initial set of data lines that define a captured image (9) of the first surface (6),
- sending the captured image (9) to a control unit (4) in communication with the scanner (3),
- generating, based on the captured image (9), a second set of data defining a processed image (13),
- sending the processed image (13) to a printing unit (5) in communication with the control unit (4), wherein the printing unit (5) prints the processed image (13) on a second surface (14) of the part (2), wherein the second surface (14) forms an angle $\alpha$ with the first surface (6), and wherein
- the processed image (13) is generated in a critical time as the processed part (2) is moved between the scanner (3) and the printing unit (5).

**12.** Method, according to claim 11, **characterised in that** the angle $\alpha$ has an approximate value of 90° so that the surfaces (6, 14) are arranged substantially perpendicular to each other.

**13.** Method, according to claim 11 or 12, **characterised in that** the processed image (13) is generated via the execution of an algorithm comprising the generation of a mirror image(42) based on at least part of the captured image (9).

**14.** Method, according to claim 11 or 12, **characterised in that** the printing unit (5) comprises four cyan (C), magenta (M), yellow (Y) and black (K) monochrome printheads, and **in that** the processed image (13) is generated via the execution of an algorithm which comprises the steps of:

- generating, based on the captured image (9), a cropped image (40) adapted to the width of the second surface (14);
- generating, based on the cropped image (40), a processed cropped image (41) having a format of 8 bits per pixel;
- generating a mirror image (42) of the processed cropped image (41);
- generating an image (43) adapted to the size of the printheads of the printing unit (5) and embedding the mirror image (42) in the adapted image (43);
- breaking down the adapted image (43) into four monochrome images (44, 45, 46, 47) and
- generating four processed monochrome images (48, 49, 50, 51) based on the four monochrome images (44, 45, 46, 47), via a diffusion algorithm adapted to a limited number of chromatic levels admitted by the printheads of the printing unit (5).

**15.** Computer program, **characterised in that** it resides in a control unit (4) of a system (1) comprised in an edging machine according to claim 1, wherein the control unit (4) is communicated with at least one scanner (3) and at least one printing unit (5) fitted with four cyan (C), magenta (M), yellow (Y) and black (K) monochrome printheads, and **in that** it comprises instructions to execute the following algorithm:

- receiving a set of data lines that defines a captured image (9) of the first surface (6) of a part (2), wherein the captured image (9) is captured by the scanner (3),
- generating, based on the captured image (9), a cropped image (40) adapted to the width of the second surface (14) of the part (2);
- generating, based on the cropped image (40), a processed cropped image (41) having a format of 8 bits per pixel;
- generating a mirror image(42) of the processed cropped image (41);
- generating an image adapted (43) to the size of the printheads of the printing unit (5) and embed the mirror image (42) in the adapted image (43);
- breaking down the adapted image (43) into four monochrome images (44, 45, 46, 47),
- generating a processed image (13) comprising four processed monochrome images (48, 49, 50, 51), wherein the four processed monochrome images (48, 49, 50, 51) are generated based on the four monochrome images (44, 45, 46, 47) via a diffusion algorithm adapted to a limited number of chromatic levels admitted by the printheads of the printing unit (5), and
- sending the processed image (13) to the printing unit (5) for its printing on the second surface (14) of the part (2).

**Patentansprüche**

**1.** Abkantmaschine, mit einem integrierten System (1) für den Druck von Bildern auf mindestens einem Teil (2), wobei besagtes System (1) Folgendes umfasst:

- mindestens einen Scanner (3), der eine erste Oberfläche (6) des Teils (2) untersucht und einen anfänglichen Satz von Datenleitungen erzeugt, der ein aufgenommenes Bild (9) festlegt;
- eine Steuereinheit (4), mit aus einem Prozessor (11), wobei der Prozessor (11) in Verbindung mit dem Scanner (3) steht und die Datenleitungen des von dem Scanner (3) übertragenen aufgenommenen Bildes (9) empfängt, und eine Speichereinheit (12) in Verbindung mit dem Prozessor (11) steht, wobei die Speichereinheit (12) Anweisungen speichert, die von dem Prozessor (11) ausgeführt werden, um einen zweite Datensatz zu erzeugen, der ein bearbeitetes Bild (13) auf der Grundlage des aufgenommenen Bildes (9) festlegt;
- mindestens eine Druckeinheit (5), die in Verbindung mit dem Prozessor (11) steht, wobei die Druckeinheit (5) dafür angepasst ist, um das bearbeitete Bild (13) zu empfangen und das bearbeitete Bild (13) auf eine zweite Oberfläche (14) des Teils (2) zu drucken, wobei die zweite Oberfläche (14) einen Winkel α mit der ersten Oberfläche (6) bildet,
- ein festes Element (20) und ein Transportelement (21), zur Auslösung der Verlagerung des bearbeiteten Teils (2) gegenüber dem festen Element (20) in eine Richtung L, was die Bewegung des Teils (2) in die Richtung L bewirkt, wobei die Richtung L mit der Längsrichtung des Teils (2) übereinstimmt, und das Teil (2) mindestens die folgenden Positionen während der Bewegung annimmt: eine anfängliche Position (30), bei der ein Ende (32) einer linken Seite (33) des Teils (2) eine erste Ebene kreuzt, wobei die erste Ebene mit dem Scanner (3) ausgerichtet wird und senkrecht zu der Richtung L verläuft, und bei der der Scanner (3) mit der Untersuchung der ersten Oberfläche (6) beginnt, und eine zweite Position (31), bei der das Ende (32) eine zweite Ebene kreuzt, wobei die zweite Ebene mit der Druckeinheit (5) ausgerichtet wird, senkrecht zu der Richtung L verläuft und in einem Abstand d von der ersten Ebene liegt, und bei der die Druckeinheit (5) mit dem Druck des bearbeiteten Bildes (13) auf der zweiten Oberfläche (14) beginnt, wobei
- das bearbeitete Bild (13) zu einem entscheidenden Zeitpunkt erzeugt wird, während das bearbeitete Teil (2) zwischen dem Scanner (3) und der Druckeinheit (5) bewegt wird, geleitet von dem Transportelement (21).

2. System (1), in Übereinstimmung mit Anspruch 1, **dadurch gekennzeichnet, dass** der Winkel α bei ungefähr 90º liegt, so dass die Oberflächen (6, 14) im Wesentlichen senkrecht zueinander angeordnet sind.

3. System (1), in Übereinstimmung mit Anspruch 1 oder 2, **dadurch gekennzeichnet, dass** der Prozessor (11) das bearbeitete Bild (13) durch die Ausführung eines Algorithmus erzeugt, der die Erzeugung eines Spiegelbildes (42) auf der Grundlage von mindestens einem Teil des aufgenommenen Bildes (9) umfasst.

4. System (1), in Übereinstimmung mit Anspruch 1 oder 2, **dadurch gekennzeichnet, dass** die Druckeinheit (5) vier monochrome Druckköpfe umfasst, nämlich Cyan (C), Magenta (M), Gelb (Y) und Schwarz (K), und der Prozessor (11) das bearbeitete Bild (13) durch die Ausführung eines Algorithmus erzeugt, der Folgendes umfasst: die Erzeugung eines zugeschnittenen Bildes (40) auf der Grundlage des aufgenommenen Bildes (9), angepasst an die Breite der zweiten Oberfläche (14); die Erzeugung eines bearbeiteten zugeschnittenen Bildes (41) auf der Grundlage des zugeschnittenen Bildes (40) im Format von 8 Bits pro Pixel; die Erzeugung eines Spiegelbildes (42) des bearbeiteten zugeschnittenen Bildes (41); die Erzeugung eines Bildes (43), angepasst an die Größe der Druckköpfe der Druckeinheit (5) und die Einbettung des Spiegelbildes (42) in das angepasste Bild (43); die Aufgliederung des angepassten Bildes (43) in vier monochrome Bilder (44, 45, 46, 47); und die Erzeugung von vier bearbeiteten monochromen Bildern (48, 49, 50, 51) auf der Grundlage dieser vier monochromen Bilder (44, 45, 46, 47) mit Hilfe eines Diffusionsalgorithmus, angepasst an eine begrenzte Zahl von chromatischen Ebenen, die von den Druckköpfen der Druckeinheit (5) angenommen werden.

5. System (1), in Übereinstimmung mit Anspruch 1 oder 2, **dadurch gekennzeichnet, dass** es Elemente zur Bewegungserfassung umfasst, die mindestens ein Erkennungssignal für die Verlagerung (23) des Transportelements (21) und mindestens ein Präsenzsignal (24) des Teils (2) auf dem Transportelement (21) erzeugen.

6. System (1), in Übereinstimmung mit Anspruch 5, **dadurch gekennzeichnet, dass** die Elemente zur Bewegungserfassung mindestens zwei Positionsgeber (25, 26) und mindestens einen Encoder (27) umfassen, der ein Impulssignal an den Scanner (3) und an die Druckeinheit (5) sendet.

7. System (1), in Übereinstimmung mit Anspruch 1, **dadurch gekennzeichnet, dass** sowohl die Bewegung des Teils (2) zwischen der ersten und der zweiten Ebene als auch die Erzeugung des bearbeiteten Bildes (13) in einer Zeit t von weniger als 5 Sekunden erfolgt.

**8.** System (1), in Übereinstimmung mit Anspruch 1, **dadurch gekennzeichnet, dass** das Teil (2) eine Spanplatte (17) mit Melaminbeschichtung ist, wobei die Platte (17) zwei Außenseiten (7, 8) und eine Kante (15) zwischen den zwei Außenseiten (7, 8) hat, und die erste Oberfläche (6) des Teils (2) mit einer der Außenseiten (7) übereinstimmt, und die zweite Oberfläche (14) mit der Kante (15) übereinstimmt.

**9.** System (1), in Übereinstimmung mit Anspruch 8, **dadurch gekennzeichnet, dass** der Prozessor (11) das bearbeitete Bild (13) durch die Ausführung eines Algorithmus erzeugt, der mindestens die Erzeugung eines Spiegelbildes (42) auf der Grundlage von mindestens einem Teil des aufgenommenen Bildes (9) umfasst.

**10.** System (1), in Übereinstimmung mit jedem der Ansprüche 1 bis 4, **dadurch gekennzeichnet, dass** die Erzeugung des aufgenommenen Bildes (9) und der Druck des bearbeiteten Bildes (13) sich überlappen.

**11.** Methode zur Abkantung von Teilen durch Druckvorgänge mit Hilfe eines in ein Abkantmaschine integrierten Systems (1), in Übereinstimmung mit Anspruch 1, **dadurch gekennzeichnet, dass** die Methode folgende Schritte umfasst:

- die Erlangung von mindestens einem von einem Scanner (3) erzeugten Bild einer ersten Oberfläche (6) von mindestens einem Teil (2),
- die Erzeugung eines anfänglichen Satz von Datenleitungen, der ein aufgenommenes Bild (9) der ersten Oberfläche (6) festlegt,
- die Versendung des aufgenommenen Bildes (9) an eine Steuereinheit (4) in Verbindung mit dem Scanner (3),
- die Erzeugung, auf der Grundlage des aufgenommenen Bildes (9), eines zweiten Datensatz zur Festlegung eines bearbeiteten Bildes (13),
- die Versendung des bearbeiteten Bildes (13) an eine Druckeinheit (5) in Verbindung mit der Steuereinheit (4), wobei die Druckeinheit (5) das bearbeitete Bild (13) auf eine zweite Oberfläche (14) des Teils (2) druckt, und die zweite Oberfläche (14) einen Winkel $\alpha$ mit der ersten Oberfläche (6) bildet, und wobei
- das bearbeitete Bild (13) zu einem entscheidenden Zeitpunkt erzeugt wird, während das bearbeitete Teil (2) zwischen dem Scanner (3) und der Druckeinheit (5) bewegt wird.

**12.** Methode, in Übereinstimmung mit Anspruch 11, **dadurch gekennzeichnet, dass** der Winkel $\alpha$ einen angenäherten Wert von 90º hat, so dass die Oberflächen (6, 14) im Wesentlichen senkrecht zueinander angeordnet sind.

**13.** Methode, in Übereinstimmung mit Anspruch 11 oder 12, **dadurch gekennzeichnet, dass** das bearbeitete Bild (13) durch die Ausführung eines Algorithmus erzeugt wird, der die Erzeugung eines Spiegelbilds (42) auf der Grundlage von mindestens einem Teil des aufgenommenen Bildes (9) umfasst.

**14.** Methode, in Übereinstimmung mit Anspruch 11 oder 12, **dadurch gekennzeichnet, dass** die Druckeinheit (5) vier monochrome Druckköpfe umfasst, nämlich Cyan (C), Magenta (M), Gelb (Y) und Schwarz (K), und dass das bearbeitete Bild (13) durch die Ausführung eines Algorithmus erzeugt wird, der folgende Schritte umfasst:

- die Erzeugung, auf der Grundlage des aufgenommenen Bildes (9), eines zugeschnittenen Bildes (40), angepasst an die Breite der zweiten Oberfläche (14);
- die Erzeugung, auf der Grundlage des zugeschnittenen Bildes (40), eines bearbeiteten zugeschnittenen Bildes (41) im Format von 8 Bits per Pixel;
- die Erzeugung eines Spiegelbildes (42) des bearbeiteten zugeschnittenen Bildes (41);
- die Erzeugung eines Bildes (43), angepasst an die Größe der Druckköpfe der Druckeinheit (5) und Einbettung das Spiegelbild (42) in das angepasste Bild (43);
- die Aufgliederung des angepassten Bildes (43) in vier monochrome Bilder (44, 45, 46, 47) und
- die Erzeugung von vier bearbeitete monochromen Bildern (48, 49, 50, 51) auf der Grundlage der vier monochromen Bilder (44, 45, 46, 47), mit Hilfe eines Diffusionsalgorithmus, angepasst an eine begrenzte Zahl von chromatischen Ebenen, die von den Druckköpfen der Druckeinheit (5) angenommen werden.

**15.** Computerprogramm, **dadurch gekennzeichnet, dass** es sich in einer Steuereinheit (4) eines Systems (1) befindet, das in einer Abkantmaschine enthalten ist, in Übereinstimmung mit Anspruch 1, wobei die Steuereinheit (4) mit mindestens einem Scanner (3) und mindestens einer Druckeinheit (5) verbunden ist, ausgestattet mit vier monochrome Druckköpfe, nämlich Cyan (C), Magenta (M), Gelb (Y) und Schwarz (K), und dass es Anweisungen zur Ausführung des folgenden Algorithmus umfasst:

- der Empfang eines Satzes von Datenleitungen, der ein aufgenommenes Bild (9) der ersten Oberfläche (6) eines Teil (2) festlegt, wobei das aufgenommene Bild (9) von dem Scanner (3) aufgenommen wird,
- die Erzeugung, auf der Grundlage des aufgenommenen Bildes (9), eines zugeschnittenen Bildes (40), angepasst an die Breite der zweiten Oberfläche (14) des Teils (2);
- die Erzeugung, auf der Grundlage des zugeschnittenen Bildes (40), eines bearbeiteten zugeschnittenen Bildes (41) im Format von 8 Bits per Pixel;
- die Erzeugung eines Spiegelbilds (42) des bearbeiteten zugeschnittenen Bildes (41);
- die Erzeugung eines Bildes (43), angepasst an die Größe der Druckköpfe der Druckeinheit (5) und die Einbettung das Spiegelbilds (42) in das angepasste Bild (43);
- die Aufgliederung des angepassten Bildes (43) in vier monochrome Bilder (44, 45, 46, 47),
- die Erzeugung eines bearbeiteten Bildes (13), das vier bearbeitete monochrome Bilder (48, 49, 50, 51) umfasst, wobei die vier bearbeiteten monochromen Bilder (48, 49, 50, 51) auf der Grundlage der vier monochromen Bilder (44, 45, 46, 47) mit Hilfe eines Diffusionsalgorithmus erzeugt werden, angepasst an eine begrenzte Zahl von chromatischen Ebenen, die von den Druckköpfen der Druckeinheit (5) angenommen werden, und
- die Versendung des bearbeiteten Bildes (13) an die Druckeinheit (5) für dessen Ausdruck auf die zweite Oberfläche (14) des Teils (2).

**Revendications**

1. Machine d'impression de chant comprenant un système intégré (1) pour l'impression d'images sur au moins une partie (2), ledit système (1) comprenant :

   - au moins un scanner (3) d'exploration d'une première surface (6) de la pièce (2) et un générateur d'un premier ensemble de lignes de données définissant une image capturée (9) ;
   - une unité de commande (4) comprenant un processeur (11), dans laquelle le processeur (11) est en communication avec le scanner (3) et reçoit les lignes de données de l'image capturée (9) transmises par le scanner (3), et une unité de mémoire (12) en communication avec le processeur (11), dans laquelle l'unité de mémoire (12) stocke des instructions qui sont exécutées par le processeur (11) pour générer un deuxième ensemble de données définissant une image traitée (13) basée sur l'image capturée (9) ;
   - au moins une unité d'impression (5), en communication avec le processeur (11), dans laquelle l'unité d'impression (5) est adaptée pour recevoir l'image traitée (13) et pour imprimer l'image traitée (13) sur une deuxième surface (14) de la pièce (2), la deuxième surface (14) formant un angle $\alpha$ avec la première surface (6),
   - un élément fixe (20) et un élément de transport (21) pour entraîner le déplacement de la pièce traitée (2) par rapport à l'élément fixe (20) dans une direction L, provoquant le mouvement de la pièce (2) dans la direction L, la direction L coïncidant avec la direction longitudinale de la pièce (2), où la pièce (2) adopte au moins les positions suivantes pendant le mouvement : une position initiale (30) dans laquelle une extrémité (32) d'un côté gauche (33) de la pièce (2) croise un premier plan, dans laquelle le premier plan est aligné avec le scanner (3) et est perpendiculaire à la direction L, et dans laquelle le scanner (3) commence l'exploration de la première surface (6), et une deuxième position (31) dans laquelle l'extrémité (32) croise un deuxième plan, dans laquelle le deuxième plan est aligné avec l'unité d'impression (5), est perpendiculaire à la direction L et est situé à une distance d du premier plan, et dans laquelle l'unité d'impression (5) commence l'impression de l'image traitée (13) sur la deuxième surface (14), et dans laquelle
   - l'image traitée (13) est générée dans un temps critique tandis que la pièce traitée (2) est déplacée entre le scanner (3) et l'unité d'impression (5) guidée par l'élément de transport (21).

2. Système (1), selon la revendication 1, **caractérisé en ce que** l'angle $\alpha$ est d'environ 90°, de sorte que les surfaces (6, 14) sont disposées sensiblement perpendiculairement l'une à l'autre.

3. Système (1), selon la revendication 1 ou 2, **caractérisé en ce que** le processeur (11) génère l'image traitée (13) par l'exécution d'un algorithme qui comprend la génération d'une image miroir (42) basée sur au moins une partie de l'image capturée (9).

4. Système (1), selon la revendication 1 ou 2, **caractérisé en ce que** l'unité d'impression (5) comprend quatre têtes d'impression monochromes cyan (C), magenta (M), jaune (Y) et noir (K), et le processeur (11) génère l'image traitée (13) via l'exécution d'un algorithme qui comprend : la génération d'une image recadrée (40) basée sur l'image capturée (9) adaptée à la largeur de la seconde surface (14) ; la génération d'une image recadrée traitée (41) basée sur l'image recadrée (40) avec un format de 8 bits par pixel ; la génération d'une image miroir (42) de l'image recadrée traitée (41) ; la génération d'une image (43) adaptée à la taille des têtes d'impression de l'unité d'impression (5) et l'intégration de l'image miroir (42) dans l'image adaptée (43) ; la décomposition de l'image adaptée (43) en images monochromes (44, 45, 46, 47) ; et la génération de quatre images monochromes traitées (48, 49, 50, 51), à partir de ces quatre images monochromes (44, 45, 46, 47), via un algorithme de diffusion adapté à un nombre limité de niveaux chromatiques admis par les têtes d'impression de l'unité d'impression (5).

5. Système (1), selon la revendication 1 ou 2, **caractérisé en ce qu'**il comprend des éléments de capture de mouvement qui génèrent au moins un signal de détection de déplacement (23) de l'élément de transport (21) et au moins un signal de présence (24) de la pièce (2) sur l'élément de transport (21).

6. Système (1), selon la revendication 5, **caractérisé en ce que** les éléments de capture de mouvement comprennent au moins deux détecteurs de position (25, 26) et au moins un codeur (27) qui envoie un signal d'impulsion au scanner (3) et à l'unité d'impression (5).

7. Système (1), selon la revendication 1, **caractérisé en ce que** tant le mouvement de la pièce (2) entre le premier et le deuxième plan et la génération de l'image traitée (13) ont lieu en un temps t de moins de 5 secondes.

8. Système (1), selon la revendication 1, **caractérisé en ce que** la pièce (2) est un panneau d'aggloméré (17) avec un placage en mélamine, dans lequel le panneau (17) a deux faces externes (7, 8) et un bord (15) entre les deux faces externes (7, 8), dans lequel la première surface (6) de la pièce (2) correspond à l'une des faces externes (7) et la seconde surface (14) correspond au bord (15).

9. Système (1), selon la revendication 8, **caractérisé en ce que** le processeur (11) génère l'image traitée (13) via l'exécution d'un algorithme comprenant au moins la génération d'une image miroir (42) basée sur au moins une partie de l'image capturée (9).

10. Système (1), selon l'une quelconque des revendications 1 à 4, **caractérisé en ce que** la génération de l'image capturée (9) et l'impression de l'image traitée (13) se chevauchent.

11. Procédé d'impression de chants sur pièces, au moyen d'un système (1) intégré dans une machine de finition de chants selon la revendication 1, **caractérisé en ce que** le procédé comprend les étapes suivantes :

   - obtenir au moins un scanner d'exploration (3) d'une première surface (6) d'au moins une pièce (2),
   - générer un premier ensemble de lignes de données qui définissent une image capturée (9) de la première surface (6),
   - envoyer l'image capturée (9) à une unité de contrôle (4) en communication avec le scanner (3),
   - générer à partir de l'image capturée (9), un deuxième ensemble de données définissant une image traitée (13),
   - envoyer l'image traitée (13) à une unité d'impression (5) en communication avec l'unité de commande (4), dans laquelle l'unité d'impression (5) imprime l'image traitée (13) sur une deuxième surface (14) de la pièce (2), dans laquelle la deuxième surface (14) forme un angle α avec la première surface (6), et dans laquelle
   - l'image traitée (13) est générée dans un temps critique tandis que la partie traitée (2) est déplacée entre le scanner (3) et l'unité d'impression (5).

12. Procédé selon la revendication 11, **caractérisé en ce que** l'angle α a une valeur approximative de 90° de sorte que les surfaces (6, 14) sont disposées sensiblement perpendiculairement l'une par rapport à l'autre.

13. Procédé selon la revendication 11 ou 12, **caractérisé en ce que** l'image traitée (13) est générée par l'exécution d'un algorithme comprenant la génération d'une image miroir (42) basée sur au moins une partie de l'image capturée (9).

14. Procédé selon la revendication 11 ou 12, **caractérisé en ce que** l'unité d'impression (5) comprend quatre têtes d'impression monochromes cyan (C), magenta (M), jaune (Y) et noir (K), et **en ce que** l'image traitée (13) est générée par l'exécution d'un algorithme qui comprend les étapes suivantes :

   - génération, à partir de l'image capturée (9), d'une image recadrée (40) adaptée à la largeur de la seconde surface (14) ;
   - génération, sur la base de l'image recadrée (40), d'une image recadrée traitée (41) ayant un format de 8 bits par pixel ;
   - génération d'une image miroir (42) de l'image recadrée traitée (41) ;

- génération d'une image (43) adaptée à la taille des têtes d'impression de l'unité d'impression (5) et intégration de l'image miroir (42) dans l'image adaptée (43) ;
- décomposition de l'image adaptée (43) en quatre images monochromes (44, 45, 46, 47) et
- génération de quatre images monochromes traitées (48, 49, 50, 51) à partir des quatre images monochromes (44, 45, 46, 47), via un algorithme de diffusion adapté à un nombre limité de niveaux chromatiques admis par les têtes d'impression de l'unité d'impression (5).

15. Programme informatique, **caractérisé en ce qu'**il réside dans une unité de commande (4) d'un système (1) compris dans une machine à imprimer les chants selon la revendication 1, dans lequel l'unité de commande (4) est en communication avec au moins un scanner (3) et au moins une unité d'impression (5) équipée de quatre têtes d'impression monochromes cyan (C), magenta (M), jaune (Y) et noir (K), et **en ce qu'**il comprend des instructions pour exécuter l'algorithme suivant :

- réception d'un ensemble de lignes de données définissant une image capturée (9) de la première surface (6) d'une pièce (2), l'image capturée (9) étant captée par le scanner (3),
- génération, à partir de l'image capturée (9), d'une image recadrée (40) adaptée à la largeur de la seconde surface (14) de la pièce (2) ;
- génération, sur la base de l'image recadrée (40), d'une image recadrée traitée (41) ayant un format de 8 bits par pixel ;
- génération d'une image miroir (42) de l'image recadrée traitée (41) ;
- génération d'une image (43) adaptée à la taille des têtes d'impression de l'unité d'impression (5) et intégration de l'image miroir (42) dans l'image adaptée (43) ;
- décomposition de l'image adaptée (43) en quatre images monochromes (44, 45, 46, 47)
- génération d'une image traitée (13) comprenant quatre images monochromes traitées (48, 49, 50, 51), les quatre images monochromes traitées (48, 49, 50, 51) étant générées à partir des quatre images monochromes (44, 45, 46, 47) via un algorithme de diffusion adapté à un nombre limité de niveaux chromatiques admis par les têtes d'impression de l'unité d'impression (5), et
- envoi de l'image traitée (13) à l'unité d'impression (5) pour son impression sur la deuxième surface (14) de la pièce (2).

FIG.1

# FIG.2

# FIG.3

FIG.4

# FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2688722 A
- US 2007283648 A1
- WO 2007054812 A2